# EUROPÄISCHE PATENTSCHRIFT

(11) **EP 2 655 960 B1**
(45) Veröffentlichungstag und Bekanntmachung des Hinweises auf die Patenterteilung: **13.09.2017**
(21) Anmeldenummer: 11810544.4
(22) Anmeldetag: 17.11.2011
(51) Int. Cl.: F21S 8/12, F21V 5/00, F21W 101/10

(54) **LED-LICHTMODUL**
LED LIGHT MODULE
MODULE D'ÉCLAIRAGE À DEL

(30) Priorität: 22.12.2010 AT 21092010
(43) Veröffentlichungstag der Anmeldung: 30.10.2013
(60) Teilanmeldung: 16197052.0
(73) Patentinhaber: ZKW Group GmbH, 3250 Wieselburg (AT)
(72) Erfinder: DANNER, Markus, A-2252 Ollersdorf (AT); MOSER, Andreas, A-3350 Haag (AT); JUNGWIRTH, Johannes, A-3325 Ferschnitz (AT); KRENN, Günther, A-3071 Böheimkirchen (AT); STEIN, Martin, A-3261 Zarnsdorf (AT)
(74) Vertreter: Patentanwaltskanzlei Matschnig & Forsthuber OG
(86) Internationale Anmeldenummer: PCT/AT2011/050031
(87) Internationale Veröffentlichungsnummer: WO 2012/083331

(56) Entgegenhaltungen:
- EP-A1- 2 159 481
- EP-A2- 2 068 068
- EP-A2- 2 187 115
- EP-A2- 2 202 453

## Beschreibung

Die Erfindung betrifft einen Fahrzeugscheinwerfer zur Erzeugung einer Hauptlichtverteilung sowie einer Zusatzlichtverteilung, wobei der Fahrzeugscheinwerfer zwei oder mehrere LED-Lichtmodule umfasst, wie offenbart in EP 2159481 A1. Es ist bekannt, einen Fahrzeugscheinwerfer aus einer Anzahl von Lichtmodulen, insbesondere LED-Lichtmodulen aufzubauen, welche im Betrieb, also bei leuchtenden Lichtmodulen, dem Scheinwerfer ein charakteristisches Aussehen entsprechend der Anordnung der Lichtmodule geben.

Dieses charakteristische Erscheinungsbild erzeugt einen hohen Wiedererkennungswert für die unterschiedlichen Automarken.

Mit einem solchen Scheinwerfer kann nun neben der Hauptlichtfunktion, z.B. einer Abblendlichtfunktion, eine Zusatzlichtfunktion, etwa ein Tagfahrlicht erzeugt werden. Dazu ist es in der Regel notwendig, dass andere Lichtmodule eingeschaltet sind oder weniger Lichtmodule eingeschaltet sind als bei der Hauptlichtfunktion, so dass bei aktivierter Zusatzlichtfunktion das charakteristische Erscheinungsbild des Scheinwerfers nicht mehr gegeben ist.

Es ist eine Aufgabe der Erfindung, einen Fahrzeugscheinwerfer zu schaffen, welcher sowohl bei aktivierter Hauptlichtfunktion als auch bei aktivierter Zusatzlichtfunktion über dasselbe optische Erscheinungsbild verfügt.

Diese Aufgabe wird mit einem eingangs erwähnten Scheinwerfer dadurch gelöst, dass erfindungsgemäß jedes der LED-Lichtmodule ein oder mehrere Primär-LED-Lichtquellen umfasst, wobei eine Primär-LED-Lichtquelle zumindest eine Leichtdiode umfasst, zwei oder mehrere Sekundär-LED-Lichtquellen umfasst, wobei eine Sekundär-LED-Lichtquelle zumindest eine Leuchtdiode umfasst, sowie eine Linse umfasst, wobei das von der zumindest einen Primär-LED-Lichtquelle emittierte Licht direkt auf die Linse abgestrahlt und von dieser in den Außenraum projiziert wird, wobei das von den Primär-LED-Lichtquellen aller LED-Module emittierte Licht die Hauptlichtverteilung bildet, und wobei das von den Sekundär-LED-Lichtquellen eines LED-Moduls emittierte Licht über einen Lichtleiter auf die Linse des LED-Moduls abgestrahlt wird, welche Linse das Licht in den Außenraum projiziert, und wobei das von den Sekundär-LED-Lichtquellen aller LED-Module emittierte Licht die Zusatzlichtverteilung bildet, wobei von zumindest einer der Sekundär-LED-Lichtquellen Licht in den Lichtleiter über zumindest eine Lichteinkoppelstelle eingekoppelt wird und, vorzugsweise im Wesentlichen parallel gerichtet, vorzugsweise zur Erzeugung eines Maximumbeitrages zu der Zusatzlichtverteilung, über zumindest eine Lichtauskoppelstelle austritt.

Mit der Erfindung wird es auf konstruktiv einfache Art und Weise möglich, die oben genannte Aufgabe zu lösen. Mit der Primär-LED-Lichtquelle wird eine Hauptlichtverteilung gebildet, mit der oder den Sekundär-LED-Lichtquellen wird die Zusatzleichtverteilung gebildet, wobei die jeweilige Lichtverteilung mittels der Linsen der Lichtmodule erzeugt wird.

Dadurch wird es möglich, dass die Lichtmodule sich nur durch die Linse unterscheiden, während die Anzahl und Anordnung der LED-Lichtquellen selbst und der verwendete Lichtleiter identisch sind.

Damit die Lichtverteilungen über die Linse optisch optimal erzeugt werden können, ist es notwendig, dass sich die Lichtaustrittsfläche für die Hauptlichtfunktion und jene für die Sekundärlichtfunktion möglichst nahe oder in der Brennebene der Linse befinden bzw. entsprechend der Bildfeldwölbung der Linse verlaufen. Durch den erfindungsgemäßen Aufbau, wo das Hauptlicht direkt auf die Linse abgestrahlt wird, das Sekundärlicht aber über einen Lichtleiter, kann dieser Aufbau auf einfache Weise realisiert werden.

Sowohl bei der Hauptlichtfunktion als auch der Zusatzlichtfunktion können somit alle Lichtmodule eingeschaltet sein und leuchten, sodass bei beiden Funktionen das gleiche Aussehen des Scheinwerfers realisiert ist.

Um auf einfache Weise ein zentrales Maximum in der Zusatzlicht-Lichtverteilung realisieren zu können ist vorgesehen, dass der zumindest eine Lichtauskoppelbereich in einem zentralen Bereich des Lichtleiters angeordnet ist.

Insbesondere liegt dieser zumindest eine Lichtauskoppelbereich entlang eines horizontalen Schnittes durch den Lichtleiter - und insbesondere in einer Richtung quer zur Lichtaustrittsrichtung gesehene - in der Mitte des horizontalen Schnittes liegt.

Horizontal bezieht sich dabei auf den in den Fahrzeug eingebauten Zustand des Scheinwerfers.

Weiters ist mit Vorteil vorgesehen, dass die zumindest eine Lichteinkoppelstelle des Lichtleiters zum Einkoppeln von Licht der zumindest einen Sekundär-LED-Lichtquelle in einem äußeren Bereich des Lichtleiters angeordnet ist.

Außerdem ist vorgesehen, dass zumindest eine der Sekundär-LED-Lichtquellen den Lichtleiter direkt durchleuchtet, wobei zweckmäßiger Weise die zumindest eine Sekundär-LED-Lichtquelle, deren Licht direkt durch den Lichtleiter durchtritt, zwischen der zumindest einen Lichteinkoppelstelle und der zumindest einen Lichtauskoppelstelle angeordnet ist.

Dies dient zur Erzielung eines homogenen Lichtverteilungs-Beitrages zu der Zusatzlichtverteilung, in erster Linie aber dazu, um einen nahtlosen Übergang sowohl im Lichtbild als auch im Erscheinungsbild des Lichtmoduls von den Sekundär-LED-Lichtquellen, die Licht in den Lichtleiter einkoppeln, zu der zumindest einen Primär-LED-Lichtquelle zu ermöglichen. Aufgrund des konstruktiven Aufbaus von typischerweise verwendeten Primär-LED-Lichtquellen (Stichwort LED-Keramik) reicht der Lichtleiter üblicherweise nicht so weit an die zumindest eine Primär-LED-Lichtquelle heran, um einen nahtlosen Übergang zwischen der zumindest einen Licht einkoppelnden Sekundär-LED-Lichtquelle und der oder den Primär-LED-Lichtquellen erzeugen zu können.

Gelingt es, den Lichtleiter ausreichend weit an die Primär-LED-Lichtquelle(n) heranzuführen, sind die direkt durch den Lichtleiter durchleuchtenden Sekundär-LED-Lichtquellen nicht unbedingt notwendig.

Üblicherweise, um ausreichend Licht zu erhalten und/oder um eine möglichst vollständig leuchtende Lichtfläche vorliegen zu haben, ist vorgesehen, dass im Sekundärlicht-Betrieb die zumindest eine Primär-LED-Lichtquelle gedimmt betrieben wird. Damit, wie oben schon erwähnt, ein nahtloser Übergang in der Lichtverteilung des Zusatzlichtes zu den gedimmten Primär-LED-Lichtquellen hin möglich wird, werden anschließend bzw. benachbart zu der zumindest einen Primär-LED-Lichtquelle jene Sekundär-LED-Lichtquellen angeordnet, die direkt durch den Lichtleiter durchleuchten. Damit diese problemlos an den gewünschten Stellen angeordnet werden können, werden die Sekundär-LED-Lichtquellen, welche das Maximum in der Zusatzlicht Lichtverteilung erzeugen, außerhalb angeordnet, da deren Licht ohnehin durch den Lichtleiter an die gewünschte Stelle geleitet wird.

Bei einer konkreten Variante der Erfindung ist vorgesehen, dass pro Lichtmodul genau zwei oder zumindest zwei Sekundär-LED-Lichtquellen vorgesehen sind, deren Licht direkt durch den Lichtleiter durchtritt, und genau zwei oder zumindest zwei Sekundär-LED-Lichtquellen vorgesehen sind, welche Licht über zumindest eine Lichteinkoppelstelle, vorzugsweise über genau zwei oder eine der Anzahl der Sekundär-LED-Lichtquellen entsprechende Anzahl an Lichteinkoppelstellen in den Lichtleiter einkoppeln.

Weiters ist vorzugsweise vorgesehen, dass die Sekundär-LED-Lichtquellen entlang der Horizontalerstreckung des Lichtleiters verteilt angeordnet und vorzugsweise symmetrisch in Bezug auf die zumindest eine Lichtauskoppelstelle angeordnet sind.

Der Begriff horizontal bezieht sich auf den im Fahrzeug eingebauten Zustand, bedeutet aber nicht notwendiger Weise, dass diese Lichtquelle alle entlang einer Linie (Horizontallinie) angeordnet sind.

Außerdem ist auch noch vorgesehen, dass der Lichtleiter zumindest eine Öffnung oder Ausnehmung zum Durchtritt von Licht aus der zumindest einen Primär-LED-Lichtquelle aufweist.

Auf diese Weise wird es möglich, alle Sekundär-LED-Lichtquellen oder überhaupt alle LED-Lichtquellen auf einem gemeinsamen LED-Print anzubringen. Außerdem wird die Lichtverteilung der Hauptlichtfunktion vom Lichtleiter praktisch nicht beeinflusst.

Schließlich wird es dadurch auch noch möglich, die zumindest eine Primär-LED-Lichtquelle im oder nahe dem Brennpunkt der Linse anzubringen, um die Hauptlicht Lichtverteilung in optimaler Weise zu erzeugen.

Dazu ist vorzugsweise die zumindest eine Primär-LED-Lichtquelle in der Öffnung bzw.

### Ausnehmung angeordnet.

Die Ausnehmung und die zumindest eine Primär-LED-Lichtquelle sind dabei vorzugsweise passgenau aufeinander abgestimmt, üblicherweise ist die Primär-LED-Lichtquelle aber nicht in der Öffnung/Aufnahme gehalten/befestigt.

Bei Verwendung einer ausreichend lichtstarken Primär-LED-Lichtquelle ist es von Vorteil in Hinblick auf einen einfachen Aufbau, wenn genau eine Primär-LED-Lichtquelle vorgesehen ist.

Weiters ist vorgesehen, dass der Lichtleiter anschließend an eine Lichteinkoppelstelle einen gekrümmten, z.B. parabolisch geformten Abschnitt aufweist, welcher die eingekoppelten Lichtstrahlen der zumindest einen Sekundär-LED-Lichtquelle im Wesentlichen parallel richtet.

Vorteilhafter Weise ist dabei der Lichtleiter im Bereich des gekrümmten Abschnittes bereichsweise oder im gesamten gekrümmten Abschnitt Licht reflektierend ausgebildet.

Dies dient zur Steigerung der Effizienz, d.h. es können auf diese Weise Lichtverluste verringert oder ganz vermieden werden. Der Abschnitt ist dabei mit z.B. (von der Außenseite) mit einer reflektierenden Schicht bedampft.

Konstruktiv ist es weiters zweckmäßig, wenn anschließend an einen solchen gekrümmten Abschnitt des Lichtleiters ein Lichtleiter-Verbindungsabschnitt vorgesehen ist, welcher den gekrümmten Lichtleiterabschnitt mit dem Lichtleiterauskoppelbereich verbindet, wobei der Lichtleiter-Verbindungsabschnitt eine von den Sekundär-LED-Lichtquellen abgewandte, Begrenzungsfläche aufweist, welche Begrenzungsebene eben ausgebildet ist oder gekrümmt, wobei vorzugsweise die Krümmung an die Bildfeldwölbung der Linse angepasst ist.

Die abgewandte Begrenzungsfläche bildet die Lichtaustrittsfläche des Lichtleiters.

Auf diese Weise ergibt sich eine leuchtende Fläche der Sekundär-LED-Lichtquellen, welche vorzugsweise der Bildfeldwölbung der Linse folgt. Bei einer ebenen Lichtaustrittsfläche wird das Licht der direkt durch den Lichtleiter durchtretenden Sekundär-LED-Lichtquellen nicht mehr vollständig in der Brennfläche/Brennlinie der Linse liegen und daher etwas verzerrt abgebildet. Dies spielt aber bei der Zusatz-Lichtfunktion eine untergeordnet Rolle, da Lichtfunktion keine scharfe HD-Linie aufweist sondern in erster Linie die Lichtmenge in den Messpunkten liefern und homogen sein muss.

Der konstruktive Aufbau eines Lichtleiters mit einem gekrümmten, vorzugsweise parabolischen Abschnitt ermöglicht die Verwendung von herkömmlichen LED-Lichtquellen, da dann diese in einer gemeinsamen Ebene und entsprechend auf einem gemeinsamen LED-Print liegen können. Bei Verwendung von sogenannten "Side-LEDs", welche Licht zu einer Seite abstrahlen (und nicht im Wesentlichen entlang der 0°-Richtung), könnte der gekrümmte, parabolische Abschnitt prinzipiell entfallen und das Licht direkt in den/ die Lichtauskoppelbereiche abgestrahlt werden. Diese Side-LEDs können dann ebenfalls problemlos auf einem gemeinsamen LED-Print montiert werden.

Die Parallelrichtung der Strahlen solcher Side-LEDs kann über einen entsprechend adaptierten Lichtauskoppelbereich oder über z.B. einen parabolischen Reflektor erfolgen, welcher zwischen den Side-LEDs und dem Lichtleiter angeordnet ist.

Der Lichtleiter kann auch im Einkoppelbereich parabolisch geformt sein, was den Vorteil hat, der so geformte Lichtleiter nicht unbedingt mit einer reflektierenden Schicht beschichtet werden muss.

Die Primär-LED-Lichtquelle kann in ihrer Ausnehmung so angeordnet werden, dass ihre Lichtaustrittsebene in der Ebene der äußeren, ebenen oder gekrümmten Begrenzungsfläche des Lichtleiters liegt, wobei die Primär-LED-Lichtquelle, insbesondere deren eine oder mehrere Lichtaustrittsflächen, möglichst exakt im Brennpunkt der Linse liegen.

Die den Sekundär-LED-Lichtquellen zugewandte Begrenzungsfläche des Lichtleiters ist vorzugsweise eben oder gekrümmt ausgebildet.

Außerdem ist vorzugsweise vorgesehen, dass die den Sekundär-LED-Lichtquellen zugewandte Begrenzungsfläche des Lichtleiters und die von den Sekundär-LED-Lichtquellen abgewandte Begrenzungsfläche parallel zueinander verlaufen.

Weiters ist auch vorgesehen, dass die zumindest eine Lichtauskoppelstelle derart ausgebildet ist, dass Licht aus dem Lichtleiter-Verbindungsabschnitt, vorzugsweise im Wesentlichen normal auf das Licht aus dem Lichtleiter-Verbindungsabschnitt, umgelenkt wird, wozu die zumindest eine Lichtauskoppelstelle z.B. gestuft oder prismenförmig ausgebildet ist.

Durch die gestufte oder prismenförmige Ausgestaltung der Lichtauskoppelstelle(n) werden die Lichtstrahlen umgelenkt, die Parallelrichtung der Strahlen erfolgt im Lichtleiter mit dem gekrümmten, vorzugsweise parabolischen Abschnitt

Um die gesetzlich vorgeschriebene vertikale Ausdehnung des Lichtes des Zusatzlichtes realisieren zu können ist außerdem vorgesehen, dass die Lichtaustrittsfläche des Lichtleiters hinsichtlich seiner vertikalen Erstreckung eine definierte Ausdehnung, vorzugsweise unterschiedliche definierte vertikale Ausdehnungen an unterschiedlichen horizontalen Punkten, aufweist.

Zusammengefasst bedeutet das, dass die Lichtaustrittsfläche insbesondere in vertikaler Richtung eine (unter Umständen entlang der Horizontalerstreckung variierende) Vertikalerstreckung aufweist, damit in vertikaler Richtung die notwendige Erstreckung des Lichtbildes erreicht werden kann.

Dabei ist vorzugsweise die Lichtaustrittsfläche um eine Vertikalachse spiegelsymmetrisch.

Die Linsen der einzelnen Lichtmodule sind dazu derart ausgebildet, dass die überlagerten Lichtbilder der einzelnen Lichtmodule die Hauptlichtfunktion und/oder die Zusatzlichtfunktion ergeben.

Dabei liegt in der Regel das Hauptaugenmerk darauf, dass die Hauptlichtfunktion optimal erzeugt wird, wobei die Rahmenbedingung gilt, dass natürlich Haupt- und Zusatzlichtfunktion die gesetzlichen Anforderungen erfüllen müssen.

Vorzugsweise ist vorgesehen, dass die Linsen Freiformlinsen sind, welche Freiformlinsen vorzugsweise das Lichtbild der einzelnen LED-Lichtquellen nach unten und in der Breite aufweiten.

Um eine symmetrische Ausleuchtung des Lichtleiters zu erreichen ist vorzugsweise vorgesehen, dass jene Sekundär-LED-Lichtquellen, deren Licht direkt durch den Lichtleiter durchtritt, in einer gemeinsamen Horizontalebene liegen, und dass jene Sekundär-LED-Lichtquellen, welche Licht über zumindest eine Lichteinkoppelstelle in den Lichtleiter einkoppeln, ebenfalls in einer gemeinsamen Horizontalebene liegen, wobei mit Vorteil die Horizontalebene jener Sekundär-LED-Lichtquellen, deren Licht direkt durch den Lichtleiter durchtritt, oberhalb der Horizontalebene jener Sekundär-LED-Lichtquellen, welche Licht über zumindest eine Lichteinkoppelstelle in den Lichtleiter einkoppeln, liegt.

Mit einem oben beschriebenen Fahrzeugscheinwerfer können unterschiedliche Hauptlicht-und Zusatzlichtfunktionen erzeugt werden. Falls die Hauptlichtverteilung, etwa im Fall einer Abblendlichtverteilung, einen asymmetrischen Anteil in der Lichtverteilung aufweisen muss, dann lässt sich dieser am einfachsten realisieren, wenn zumindest ein weiteres Lichtmodul zur Erzeugung eines Asymmetrieanteils in der Hauptlichtverteilung vorgesehen ist.

Dabei ist vorgesehen, dass das zumindest eine weitere Lichtmodul zumindest eine LED-Lichtquelle und zumindest eine Linse aufweist, wobei die Linse vorzugsweise eine Sammellinse ist. Anders als bei oben erörterten Lichtmodulen darf bei diesem Lichtmodul das Licht nicht in die Breite verteilt werden, da dies die Asymmetrie (an der HD-Linie) zerstören würde.

Üblicherweise ist bei aktivierter Zusatzlichtverteilung die Primär-LED-Lichtquelle gedimmt oder abgeschaltet. Dimmen hat den Vorteil, dass sich eine durchgehend leuchtende Fläche ergibt, welche im Bereich der Ausnehmung nicht dunkel ist.

Außerdem ist vorgesehen, dass üblicherweise bei aktivierter Hauptlichtverteilung die Primär-LED-Lichtquelle ein- und die Sekundär-LED-Lichtquelle(n) ausgeschaltet sind.

Es ist aber auch denkbar, dass im Falle Hauptlichtfunktion = Fernlicht die Zusatzlichtfunktion (z.B. Tagfahrlicht) ebenfalls im Betrieb ist, sodass mehr Licht vorhanden ist. Oder es könnte bei Hauptlichtfunktion = Abblendlicht vorgesehen sein, dass nur jene Leuchtdioden der Sekundär-LED-Lichtquelle(n) leuchten, welche Licht unter die Hell-Dunkel-Linie emittieren.

Beispielsweise ist die Hauptlichtverteilung eine abgeblendete Lichtverteilung, z.B. eine Abblendlichtverteilung, Nebellicht oder Autobahnlicht (z.B. nach ECE Regelung R 123), und die Zusatzlichtverteilung eine Tagfahrlichtverteilung ist.

Auf Freiformlinsen basierend können unterschiedliche Lichtverteilungen gebildet werden, welche in der Überlappung den gesetzlichen Anforderungen (SAE, ECE, usw.) an die jeweilige Lichtfunktion genügen.

Durch Verwendung eines Lichtleiters ist keine spezielle Anordnung der LED-Lichtquellen notwendig, um die gewünschten Lichtverteilungen zu erzielen.

Im Folgenden ist die Erfindung an Hand der Zeichnung näher erörtert. In dieser zeigt
Fig. 1 einen beispielhaften Scheinwerfer bestehend aus sechs Lichtmodulen in einer schematischen Ansicht von schräg vorne,
Fig. 2 den Scheinwerfer aus Figur 1 in einer schematischen Ansicht von schräg hinten,
Fig. 3 ein einzelnes Lichtmodul zur Verwendung in einem erfindungsgemäßen Scheinwerfer,
Fig. 4 ein Lichtmodul aus Figur 3 ohne Linse,
Fig. 5 die Anordnung der LED-Lichtquellen hinter dem Lichtleiter bei einem Lichtmodul aus Figur 3,
Fig. 6 eine Darstellung wie in Figur 4 mit entfernter Primär-LED-Lichtquelle,
Fig. 7 die Darstellung aus Figur 6 in einer Ansicht von schräg hinten,
Fig. 8 den Lichtleiter in einer Ansicht von schräg hinten,
Fig. 9 einen horizontalen Schnitt durch einen Lichtleiter entsprechend Figur 8,
Fig. 10 eine Draufsicht auf den Schnitt aus Figur 9 und den Strahlengang der zugeordneten Sekundär-LED-Lichtquellen,
Fig. 11 eine isometrische Ansicht der Darstellung aus Figur 10,
Fig. 12 eine gesetzlich vorgeschriebene Tagfahrlicht (DRL) Lichtverteilung,
Fig. 13a eine Tagfahrlicht Lichtverteilung aufgebaut aus mehreren Einzellichtverteilungen von einzelnen Lichtmodulen mit Freiformlinse entsprechend einem beispielhaften Scheinwerfer aus Figur 1,
Fig. 13b eine weitere beispielhafte Zusatzlichtverteilung,
Fig. 14a -14d unterschiedliche Einzel-Lichtverteilungen einer beispielsweisen Hauptlicht-Lichtverteilung, erzeugt von Lichtmodulen mit einer Freiformlinse,
Fig. 14e eine Einzel-Lichtverteilung eines Asymmetrie-Lichtmoduls, und
Fig. 14f eine Überlagerung der Einzel-Lichtbilder aus den Figuren 14a -14e.

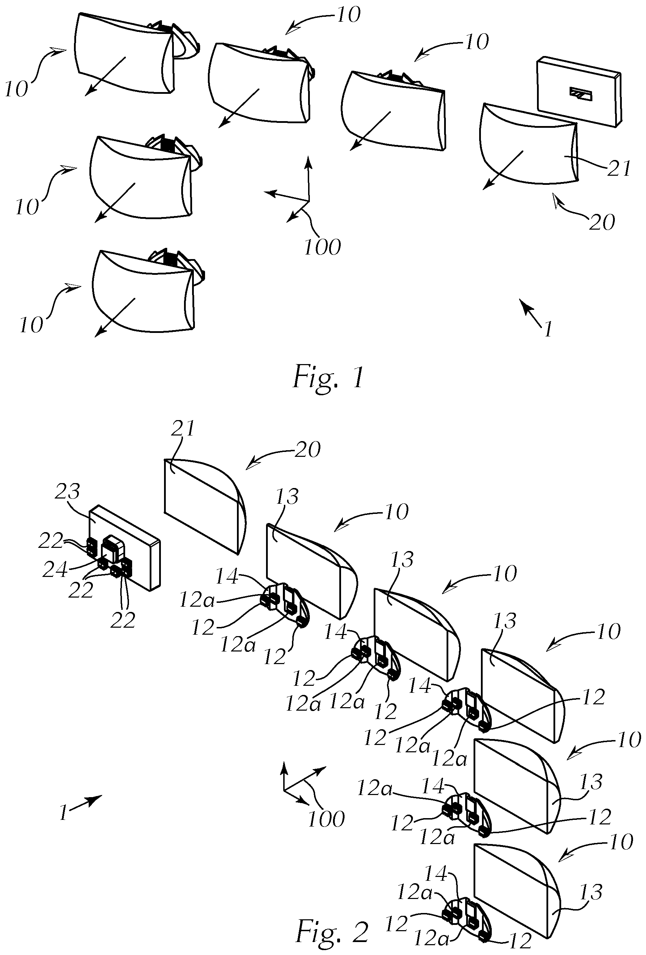

Figur 1 und Figur 2 zeigen einen beispielhaften Scheinwerfer 1, welcher zur Erzeugung einer Hauptlicht Lichtfunktion in Form eines Abblendlichtes und einer Zusatzlicht Lichtfunktion in Form eines Tagfahrlichtes ausgebildet ist.

Der Scheinwerfer 1 besteht aus fünf Lichtmodulen 10, welche hinsichtlich ihrer Anordnung bezüglich der LED-Lichtquellen einen identischen Aufbau aufweisen, und je einer FreiformLinse 13 pro Lichtmodul 10, wobei die Linsen 13 sich im Detail unterscheiden, wie dies später noch erörtert wird.

Diese fünf Lichtmodule 10 bilden eine charakteristische Anordnung, welche das charakteristische Erscheinungsbild des Scheinwerfers erzeugt.

Zur Erzeugung des Asymmetrieanteiles in der Abblendlichtverteilung ist noch ein weiteres Lichtmodul 20 vorgesehen.

Das Lichtmodul 20 umfasst mehrere LED-Lichtquellen 22, 24, wobei die LED-Lichtquelle 24 zur Erzeugung eines Beitrages zu einer Hauptlichtverteilung (z.B. Abblendlicht) dient und die LED-Lichtquellen 22 eine Beitrag zu einer Zusatzlichtverteilung (z.B. Tagfahrlicht) liefern, und zumindest eine Linse 21, wobei die Linse 21 eine Sammellinse ist. Anders als bei den Linsen 13 der Lichtmodule 10 darf bei diesem Lichtmodul das Licht nicht in die Breite verteilt werden, da dies die Asymmetrie (an der HD-Linie) zerstören würde.

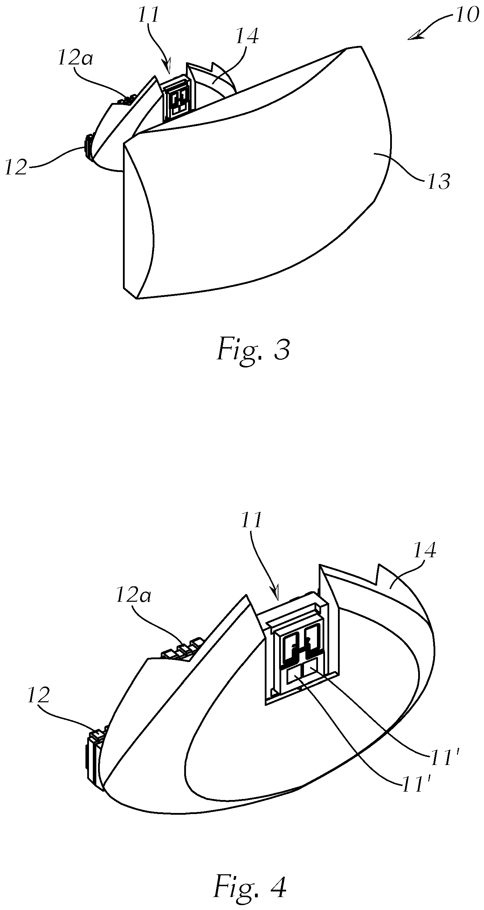

Damit nun bei einem solchen Scheinwerfer sowohl bei aktivierter Hauptlichtfunktion als auch bei aktivierter Zusatzlichtfunktion der Scheinwerfer dasselbe optische Erscheinungsbild aufweist, also in jedem Betriebsmodus alle fünf Lichtmodule 10 leuchten, ist vorgesehen, dass jedes der LED-Lichtmodule 10, wie dies in Figuren 2 und insbesondere Figuren 3 und 4 gut zu erkennen ist, eine Primär-LED-Lichtquelle 11 umfasst, wobei die Primär-LED-Lichtquelle 11 in dem gezeigten Beispiel zwei Leuchtdioden 11' umfasst (konkret bezeichnet 11' die Lichtaustrittsflächen der Leuchtdioden), und vier Sekundär-LED-Lichtquellen 12, 12a umfasst, wobei eine Sekundär-LED-Lichtquelle 12,12a eine Leuchtdiode 12' umfasst.

Außerdem leuchtet vorzugsweise auch das Lichtmodul 20, welches ebenfalls LED-Lichtquellen 22 zur Erzeugung eines Beitrages zu der Zusatzlichtverteilung aufweist.

In Lichtaustrittsrichtung vor den LED-Lichtquellen ist eine Linse 13 angeordnet, wobei das von der Primär-LED-Lichtquelle 11 emittierte Licht direkt auf die Linse 13 abgestrahlt und von dieser in den Außenraum projiziert wird, wobei das von den Primär-LED-Lichtquellen 11 aller LED-Module 10 emittierte Licht die Hauptlichtverteilung bildet.

Das von den Sekundär-LED-Lichtquellen 12, 12a des LED-Moduls 10 emittierte Licht wird über einen Lichtleiter 14 auf die Linse 13 des LED-Moduls 10 abgestrahlt, welche Linse 13 das Licht in den Außenraum projiziert, und wobei das von den Sekundär-LED-Lichtquellen 12,12a aller LED-Module 10 emittierte Licht die Zusatzlichtverteilung bildet.

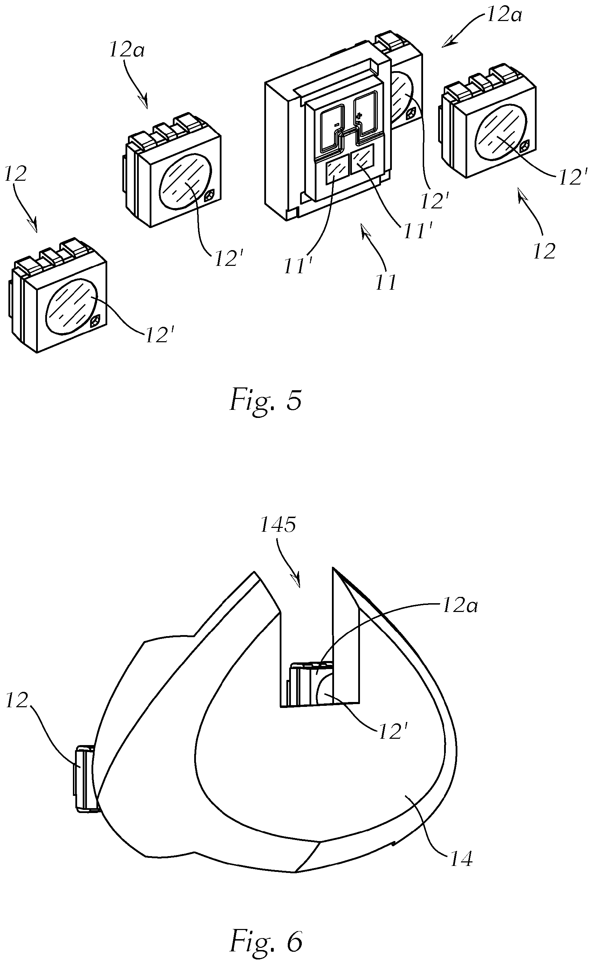

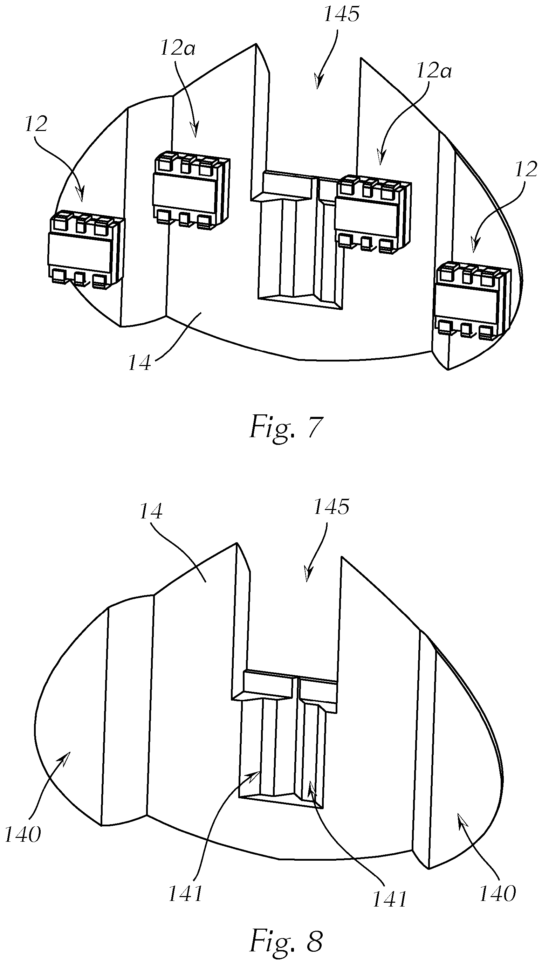

Figur 5 zeigt eine solche Anordnung der LED-Lichtquellen 11, 12, 12a, Figur 7 zeigt die Anordnung der Sekundär-LED-Lichtquellen 12,12a in Bezug auf den Lichtleiter 14.

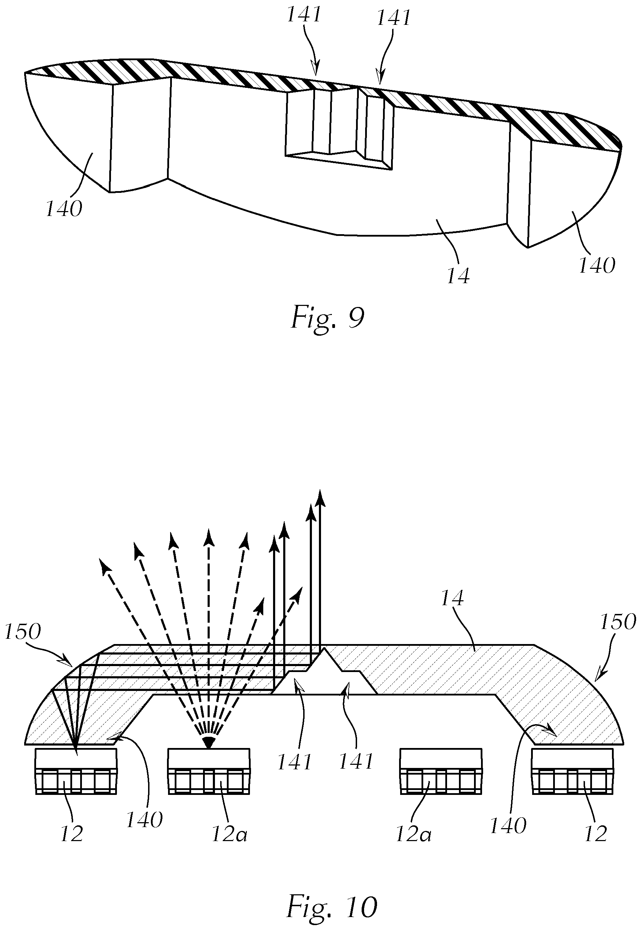

Wie Figur 10 zeigt, durchleuchten zwei der Sekundär-LED-Lichtquellen 12a den Lichtleiter 14 direkt zur Erzielung eines homogenen Lichtverteilungs-Beitrages zu der Zusatzlichtverteilung, die beiden anderen Sekundär-LED-Lichtquellen 12 koppeln Licht in den Lichtleiter 14 über jeweils eine Lichteinkoppelstelle 140 ein. Über zwei Lichtauskoppelstellen 141 tritt das im Wesentlichen parallel gerichtete Licht zur Erzeugung eines Maximumbeitrages zu der Zusatzlichtverteilung wieder aus dem Lichtleiter 14 aus.

Die Sekundär-LED-Lichtquellen 12, 12a liegen in einer gemeinsamen Vertikalebene, d.h. die beiden inneren Lichtquellen 12a sind zum Lichtleiter 14 beabstandet, wodurch sich die Sekundär-LED-Lichtquelle 12,12a auf einem gemeinsamen LED-Print anordnen lassen.

Damit die Lichtverteilungen über die Linse 13 optisch optimal erzeugt werden können, ist es notwendig, dass sich die Lichtaustrittsfläche 11' für die Hauptlichtfunktion und jene für die Sekundärlichtfunktion möglichst nahe oder in der Brennebene der Linse befinden bzw. entsprechend der Bildfeldwölbung der Linse verlaufen. Durch den erfindungsgemäßen Aufbau, wo das Hauptlicht direkt auf die Linse abgestrahlt wird, das Sekundärlicht aber über einen Lichtleiter, kann dieser Aufbau auf einfache Weise realisiert werden.

Sowohl bei der Hauptlichtfunktion als auch der Zusatzlichtfunktion können somit alle Lichtmodule eingeschaltet sein und leuchten, sodass bei beiden Funktionen das gleiche Aussehen des Scheinwerfers realisiert ist.

Die Lichtauskoppelbereiche 141 sind in einem zentralen Bereich des Lichtleiters 14 angeordnet, und zwar liegen diese entlang eines horizontalen Schnittes durch den Lichtleiter 14 - und insbesondere in einer Richtung quer zur Lichtaustrittsrichtung gesehene - in der Mitte des horizontalen Schnittes (siehe Figur 10).

Horizontal bezieht sich dabei auf den in dem Fahrzeug eingebauten Zustand des Scheinwerfers.

Die Lichteinkoppelstellen 140 des Lichtleiters 14 sind in einem äußeren Bereich des Lichtleiters 14 angeordnet ist, und die Sekundär-LED-Lichtquellen 12a, deren Licht direkt durch den Lichtleiter 14 durchtritt, sind jeweils zwischen der einer Lichteinkoppelstelle 140 und einer Lichtauskoppelstelle 141 angeordnet.

Üblicherweise, um ausreichend Licht zu erhalten und/oder um eine möglichst vollständig leuchtende Lichtfläche vorliegen zu haben, ist vorgesehen, dass im Sekundärlicht-Betrieb die Primär-LED-Lichtquelle gedimmt betrieben wird. Damit ein nahtloser Übergang in der Lichtverteilung des Zusatzlichtes zu der gedimmten Primär-LED-Lichtquelle hin möglich wird, werden anschließend bzw. benachbart zu der Primär-LED-Lichtquelle jene Sekundär-LED-Lichtquellen angeordnet, welche direkt durch den Lichtleiter durchleuchten. Damit diese problemlos an den gewünschten Stellen angeordnet werden können, werden die Sekundär-LED-Lichtquellen, welche das Maximum in der Zusatzlicht Lichtverteilung erzeugen, außerhalb angeordnet, da deren Licht ohnehin durch den Lichtleiter an die gewünschte Stelle geleitet wird.

Die Sekundär-LED-Lichtquellen 12,12a sind entlang der Horizontalerstreckung des Lichtleiters 14 verteilt angeordnet und vorzugsweise symmetrisch in Bezug auf die Lichtauskoppelstellen 141 angeordnet.

In den Figuren 6 - 8 gut zu erkennen ist, dass außerdem noch vorgesehen ist, dass der Lichtleiter 14 eine Öffnung/ Ausnehmung 145 zum Durchtritt von Licht aus der Primär-LED-Lichtquelle 11 aufweist, wobei die Primär-LED-Lichtquelle 11 in der Ausnehmung 145 angeordnet ist.

Die Ausnehmung 145 und die Primär-LED-Lichtquelle sind passgenau aufeinander abgestimmt, sodass die Primär-LED-Lichtquelle exakt in die Ausnehmung 145 passt, üblicherweise ist die Primär-LED-Lichtquelle aber nicht in der Aufnahme gehalten/befestigt.

Auf diese Weise wird es möglich, alle LED-Lichtquellen, sowohl die Primär- als auch die Sekundär-LED-Lichtquellen, auf einem gemeinsamen LED-Print anzubringen.

Es kann aber auch vorgesehen sein, dass nur die Sekundär-LED-Lichtquellen auf einem gemeinsamen LED-Print angeordnet sind.

Außerdem wird die Lichtverteilung der Hauptlichtfunktion vom Lichtleiter praktisch nicht beeinflusst.

Schließlich wird es dadurch auch noch möglich, die Primär-LED-Lichtquelle 11 im oder nahe dem Brennpunkt der Linse 13 anzubringen, um die Hauptlicht Lichtverteilung in optimaler Weise zu erzeugen.

Die Primär-LED-Lichtquelle 11 ist dabei derart in der Ausnehmung 145 angeordnet, dass die Lichtaustrittsflächen 11' der Primär-LED-Lichtquelle und die Lichtaustrittsfläche des Lichtleiters 14 im Wesentlichen in einer gemeinsamen Ebene liegen.

Betrachtet man die Figuren 9 - 11, insbesondere Figur 10, so erkennt man, dass der Lichtleiter 14 anschließend an eine Lichteinkoppelstelle 140 einen gekrümmten, z.B. parabolisch geformten Abschnitt 150 aufweist, welcher die eingekoppelten Lichtstrahlen der Sekundär-LED-Lichtquelle 12 im Wesentlichen parallel richtet.

Der Lichtleiter 14 kann im Bereich des gekrümmten Abschnittes 150 bereichsweise oder im gesamten gekrümmten Abschnitt 150 Licht reflektierend ausgebildet ist.

Dies dient zur Steigerung der Effizienz, d.h. es können auf diese Weise Lichtverluste verringert oder ganz vermieden werden. Der Abschnitt ist dabei mit z.B. (von der Außenseite) mit einer reflektierenden Schicht bedampft.

Anschließend an einen solchen gekrümmten Abschnitt 150 des Lichtleiters 14 ist ein Lichtleiter-Verbindungsabschnitt 151 vorgesehen, welcher den gekrümmten Lichtleiterabschnitt 150 mit dem Lichtleiterauskoppelbereich 141 verbindet, wobei der Lichtleiter-Verbindungsabschnitt 151 eine von den Sekundär-LED-Lichtquellen 12a abgewandte, Begrenzungsfläche 152 aufweist, welche Begrenzungsebene 152 wie in dem gezeigten Beispiel eben ausgebildet ist.

Die abgewandte Begrenzungsfläche 152 bildet die Lichtaustrittsfläche des Lichtleiters, welche vorzugsweise durch den Brennpunkt der Linse 13 verläuft.

Auf diese Weise ergibt sich eine leuchtende Fläche der Sekundär-LED-Lichtquellen.

Diese Lichtaustrittsfläche 152 kann mit Vorteil entgegen der Darstellung in den Figuren auch gekrümmt sein, wobei die Krümmung dann vorzugsweise der Bildfeldwölbung der Linse folgt. Bei einer ebenen Lichtaustrittsfläche wird das Licht der direkt durch den Lichtleiter durchtretenden Sekundär-LED-Lichtquellen nicht mehr vollständig in der Brennfläche/Brennlinie der Linse liegen und daher etwas verzerrt abgebildet. Dies spielt aber bei der Zusatz-Lichtfunktion eine untergeordnet Rolle, da die Lichtfunktion keine scharfe HD-Linie aufweist sondern in erster Linie die Lichtmenge in den Messpunkten liefern und homogen sein muss.

Die Primär-LED-Lichtquelle kann in ihrer Ausnehmung so angeordnet werden, dass ihre Lichtaustrittsebene in der Ebene der äußeren, ebenen oder gekrümmten Begrenzungsfläche des Lichtleiters liegt, wobei die Primär-LED-Lichtquelle, insbesondere deren Lichtaustrittsflächen, möglichst exakt im Brennpunkt der Linse liegen.

Die den Sekundär-LED-Lichtquellen 12a zugewandte Begrenzungsfläche 153 des Lichtleiters 14 ist wie gezeigt vorzugsweise eben ausgebildet und die den Sekundär-LED-Lichtquellen 12a zugewandte Begrenzungsfläche 153 des Lichtleiters 14 und die von den Sekundär-LED-Lichtquellen 12a abgewandte Begrenzungsfläche 152 verlaufen parallel zueinander.

Wie Figur 10 weiters zeigt, sind die Lichtauskoppelstellen 141 derart ausgebildet, dass Licht aus dem Lichtleiter-Verbindungsabschnitt 151 im Wesentlichen normal auf das Licht aus dem Lichtleiter-Verbindungsabschnitt 151 umgelenkt wird, wozu die Lichtauskoppelstellen 141 z.B. gestuft oder prismenförmig ausgebildet sind.

Die parallele Ausrichtung der Strahlen erfolgt durch den/die gekrümmten, vorzugsweise parabolischen Abschnitte.

Um die gesetzlich vorgeschriebene vertikale Ausdehnung des Lichtes des Zusatzlichtes realisieren zu können ist außerdem vorgesehen, dass die Lichtaustrittsfläche 152 des Lichtleiters 14 insbesondere hinsichtlich seiner vertikalen Erstreckung eine definierte Ausdehnung, vorzugsweise unterschiedliche definierte vertikale Ausdehnungen an unterschiedlichen horizontalen Punkten, aufweist. Dies ist beispielsweise in Figur 6 gut zu erkennen.

Zusammengefasst bedeutet das, dass die Lichtaustrittsfläche insbesondere in vertikaler Richtung eine (unter Umständen entlang der Horizontalerstreckung variierende) Vertikalerstreckung aufweist, damit in vertikaler Richtung die notwendige Erstreckung des Lichtbildes (der Zusatzlichtverteilung als Überlagerung der Lichtverteilungen der einzelnen Lichtmodule 10) erreicht werden kann.

Dabei ist vorzugsweise die Lichtaustrittsfläche um eine Vertikalachse spiegelsymmetrisch, um eine in horizontaler Richtung symmetrische Lichtverteilung zu erhalten.

Die Linsen 13 der einzelnen Lichtmodule 10 sind dazu derart ausgebildet, dass die überlagerten Lichtbilder der einzelnen Lichtmodule 10 die Hauptlichtfunktion und/oder die Zusatzlichtfunktion ergeben.

Dabei liegt in der Regel das Hauptaugenmerk darauf, dass die Hauptlichtfunktion optimal erzeugt wird, wobei die Rahmenbedingung gilt, dass natürlich Haupt- und Zusatzlichtfunktion die gesetzlichen Anforderungen erfüllen müssen.

Vorzugsweise ist vorgesehen, dass die Linsen 13 Freiformlinsen sind, welche Freiformlinsen vorzugsweise das Lichtbild der einzelnen LED-Lichtquellen nach unten und in der Breite aufweiten (dies gilt sowohl für das Licht der Primär- als auch Sekundärlichtverteilung).

Um eine symmetrische Ausleuchtung des Lichtleiters zu erreichen ist vorzugsweise vorgesehen, dass jene Sekundär-LED-Lichtquellen, deren Licht direkt durch den Lichtleiter durchtritt, in einer gemeinsamen Horizontalebene liegen, und dass jene Sekundär-LED-Lichtquellen, welche Licht über zumindest eine Lichteinkoppelstelle in den Lichtleiter einkoppeln, ebenfalls in einer gemeinsamen Horizontalebene liegen, wobei mit Vorteil die Horizontalebene jener Sekundär-LED-Lichtquellen, deren Licht direkt durch den Lichtleiter durchtritt, oberhalb der Horizontalebene jener Sekundär-LED-Lichtquellen, welche Licht über zumindest eine Lichteinkoppelstelle in den Lichtleiter einkoppeln, liegt.

Üblicherweise sind bei aktiviertem Tagfahrlicht die Primär-LED-Lichtquellen 11 gedimmt. Dimmen hat den Vorteil, dass sich eine durchgehend leuchtende Fläche ergibt, welche im Bereich der Ausnehmung nicht dunkel ist.

Außerdem ist vorgesehen, dass bei aktivierter Abblendlichtverteilung die Primär-LED-Lichtquelle ein- und die Sekundär-LED-Lichtquelle(n) ausgeschaltet sind.

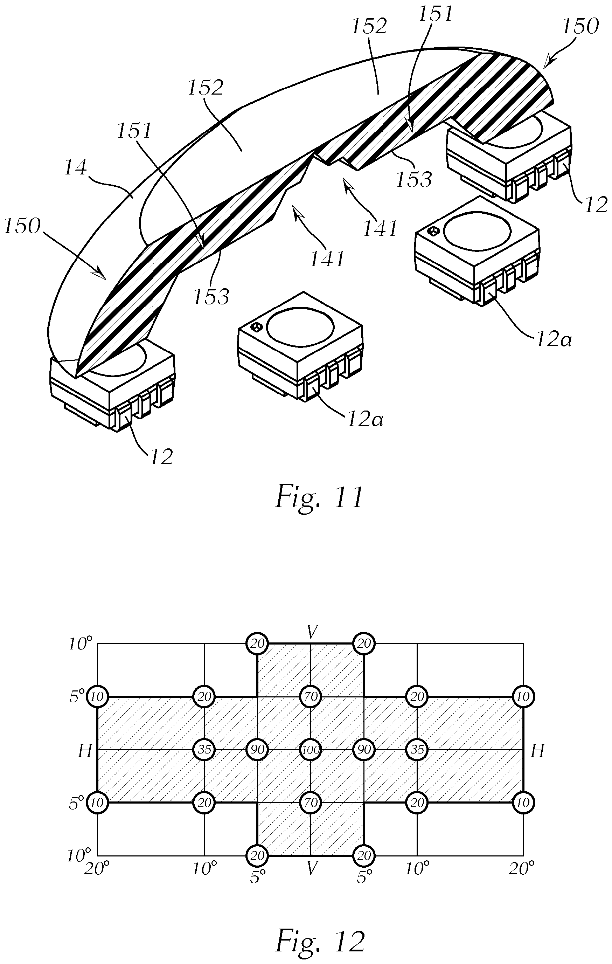

Figur 12 zeigt eine gesetzlich vorgeschriebene Tagfahrlicht (DRL) Lichtverteilung, welche ein Maximum im Zentrum, auf HV, hat.

Es handelt sich um keine völlig homogen verteilte Lichtverteilung, vielmehr ist das Licht im Zentrum konzentriert, die sich in die Breite erstreckt.

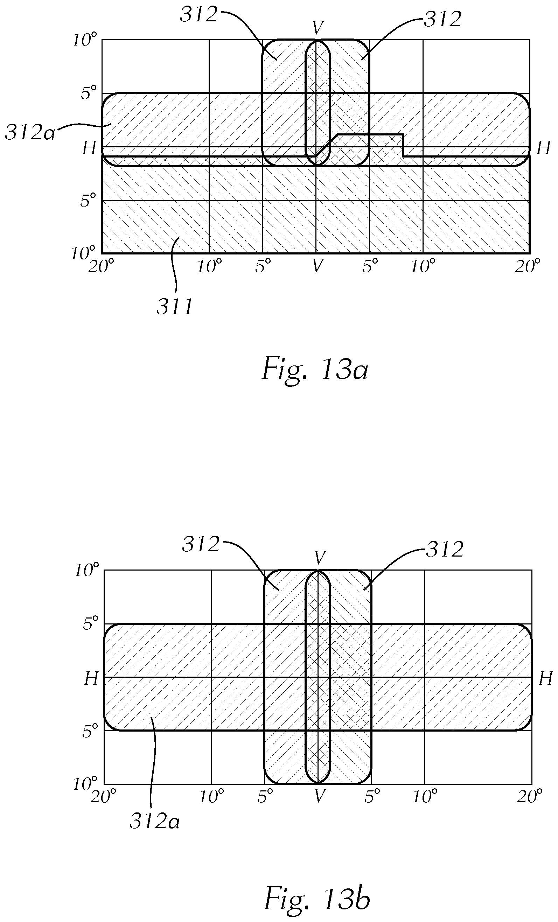

Figur 13a und Figur 13b zeigt eine Tagfahrlicht Lichtverteilung aufgebaut aus mehreren Einzellichtverteilungen von einzelnen Lichtmodulen mit Freiformlinse.

Jedes Modul 10 liefert einen Anteil zu der Zusatzlicht (Tagfahrlicht) Lichtverteilung wie in Figur 13a und 13b dargestellt, wobei sich die einzelnen Lichtverteilungen durch die unterschiedlich geformten Linsen 13 geringfügig voneinander unterscheiden. In der Überlagerung ergeben diese Lichtbilder dann die geforderten Lichtwerte. Die von den LED-Lichtquellen 12,12a erzeugten Lichtverteilung sind in Figur 13a und 13b mit 312, 312a bezeichnet.

Die Lichtverteilung in Figur 13a entspricht dabei jener, wie sie unter Verwendung von in der Beschreibung erörterten Lichtmodulen 10 zusammen mit dem Lichtmodul 20 erzeugt wird. Die Lichtverteilungen 312 und 312a reichen dabei nur soweit unter HD, wie es notwendig ist, damit diese mit der Lichtverteilung 311 der gedimmten Primär-LED-Lichtquelle überlappen.

Die Tagfahrlicht Lichtverteilung in der speziellen Ausführungsform nach Figur 13a wäre ohne gedimmte Primär-LED-Lichtquelle nicht gesetzeskonform, da zu wenig Licht unter HD emittiert wird. Dies ergibt sich daraus, dass die Sekundär-LED-Lichtquellen 12, 12a unterhalb der Brennlinie der Linse angeordnet sind. Erst durch die Dimmung der Primär-LED-Lichtquelle wird die Zusatzlichtverteilung gesetzeskonform.

Der Asymmetrie-Anteil in der Lichtverteilung in Figur 13a ergibt sich durch das Lichtmodul 20 durch die LED-Lichtquelle 24. Weiters liefert das Lichtmodul 20 mit den LED-Lichtquellen 22 einen Beitrag zu der Zusatzlicht Lichtverteilung.

Figur 13b zeigt eine weitere Ausführungsform, bei welcher die Sekundär-LED-Lichtquellen und auch die gekrümmten Abschnitte des Lichtleiters der Lichtmodule 10 auf Höhe ihrer jeweiligen Primär-LED-Lichtquelle liegen.

Gleichzeitig müssen sich die prismenförmigen Lichtauskoppelbereiche des Lichtleiters der Lichtmodule 10 weiter nach oben erstrecken, damit das Lichtbild nach unten (unter HD) erweitert wird. Die Lichtauskoppelbereiche müssen sich also auch auf Höhe und oberhalb der Primär-LED-Lichtquelle befinden.

Zu der in Figur 13b gezeigten Lichtverteilung tragen weder die gedimmte Primär-LED-Lichtquelle des Lichtmoduls 10 noch die LED-Lichtquelle 24 des Lichtmoduls 20 zur Sekundärlicht Lichtverteilung bei, was u.U. die Verwendung stärkerer Sekundär-LED-Lichtquelle notwendig macht.

Es kann aber auch vorgesehen sein, dass auch zu der in Figur 13b gezeigten Lichtverteilung gedimmte Primär-LED-Lichtquellen noch einen Beitrag liefern.

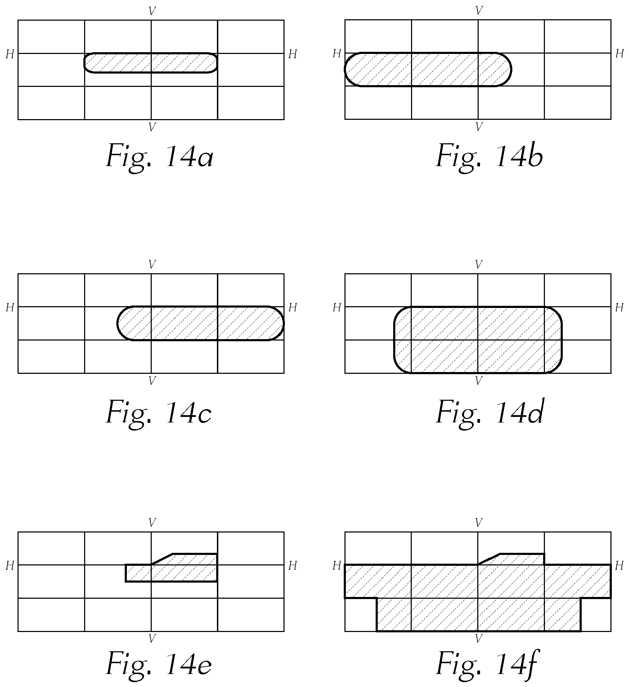

Figur 14f zeigt eine Abblendlichtverteilung. Die Figuren 14a - 14d zeigen ein Set möglicher Einzel-Lichtverteilungen einzelner Lichtmodule 10 mit entsprechenden Linsen 13, z.B. Freiformlinsen, als Beitrag zu dieser Abblendlichtverteilung, wobei der Aufbau aus Sicht der Lichtquellen bei diesen Modulen 10 identisch ist, die unterschiedlichen Lichtverteilungen ergeben sich somit durch die unterschiedlichen Linsen 13 und/oder Anzahl und/oder Position der LEDs der Hauptlichtverteilung.

Mit der Lichtverteilung in Figur 14a erreicht man ein hohes Maximum des Lichtstroms an der Hell-Dunkel-Linie, die Lichtverteilungen in Figur 14b und Figur 14c stellen die nötige Breite her, und die Lichtverteilung in Figur 14d liefert einen Beitrag für das Vorfeld der Abblendlichtverteilung. Mit einem zusätzlichen Linsenmodul 20 (Sammellinse 21) erhält man die Asymmetrie-Lichtverteilung in Figur 14e. Bei dem beispielhaften Asymmetrie-Modul 20 wird mit einer Primär-LED-Lichtquelle 24 in Zusammenspiel mit einem Lichttunnel als Teil eines Optikelementes 23 der typische Anstieg im Lichtbild der Abblendlichtverteilung erzeugt.

Durch Überlagerung der Lichtverteilungen erhält man schließlich die Abblendlichtverteilung in Figur 14f.

Abschließend lässt sich zusammenfassen, dass bei einer vorteilhaften Variante die
*) Hauptlichtverteilung von den Primär-LED-Lichtquellen der Lichtmodule 10 und 20 gebildet wird, und
*) die Zusatzlichtverteilung von den Sekundär-LED-Lichtquelle der Lichtmodule 10 und 20 sowie von den gedimmten Primär-LED-Lichtquellen der Lichtmodule 10 und 20, sodass bei dieser Variante sowohl Hauptlicht als auch Zusatzlicht alle Lichtmodule leuchten.

Es kann aber auch vorgesehen sein, dass
*) Hauptlichtverteilung von den Primär-LED-Lichtquellen der Lichtmodule 10 und 20 gebildet wird, und
*) die Zusatzlichtverteilung nur von den Sekundär-LED-Lichtquelle der Lichtmodule 10 und 20, ohne gedimmte Primär-LED-Lichtquellen der Lichtmodule 10 und 20.

In letzteren Fall kann die Verwendung stärkerer Sekundär-LED-Lichtquellen für die Lichtmodule 10 und gegebenenfalls auch das Lichtmodul 20 notwendig sein.

Es kann weiters auch vorgesehen sein, dass z.B. die Hauptlichtverteilung von allen Lichtmodulen 10, 20 erzeugt wird und die Zusatzlichtverteilung nur von den Lichtmodulen 10, wobei die Primär-LED-Lichtquelle gedimmt oder ausgeschaltet sein kann.

## Patentansprüche

1. Fahrzeugscheinwerfer (1) zur Erzeugung einer Hauptlichtverteilung sowie einer Zusatzlichtverteilung, wobei der Fahrzeugscheinwerfer (1) zwei oder mehrere LED-Lichtmodule (10) umfasst, wobei jedes der LED-Lichtmodule (10)
*) ein oder mehrere Primär-LED-Lichtquellen (11) umfasst, wobei eine Primär-LED-Lichtquelle (11) zumindest eine Leuchtdiode (11') umfasst,
*) zwei oder mehrere Sekundär-LED-Lichtquellen (12, 12a) umfasst, wobei eine Sekundär-LED-Lichtquelle (12, 12a) zumindest eine Leuchtdiode (12') umfasst, sowie
*) eine Linse (13) umfasst,
wobei das von der zumindest einen Primär-LED-Lichtquelle (11) emittierte Licht direkt auf die Linse (13) abgestrahlt und von dieser in den Außenraum projiziert wird, wobei das von den Primär-LED-Lichtquellen (11) aller LED-Module (10) emittierte Licht die Hauptlichtverteilung bildet,
und wobei das von den Sekundär-LED-Lichtquellen (12, 12a) eines LED-Moduls (10) emittierte Licht über einen Lichtleiter (14) auf die Linse (13) des LED-Moduls (10) abgestrahlt wird, welche Linse (13) das Licht in den Außenraum projiziert, und wobei das von den Sekundär-LED-Lichtquellen (12, 12a) aller LED-Module (10) emittierte Licht die Zusatzlichtverteilung bildet,
wobei von zumindest einer der Sekundär-LED-Lichtquellen (12) Licht in den Lichtleiter (14) über zumindest eine Lichteinkoppelstelle (140) eingekoppelt wird und,
vorzugsweise im Wesentlichen parallel gerichtet, vorzugsweise zur Erzeugung eines Maximumbeitrages zu der Zusatzlichtverteilung, über zumindest eine Lichtauskoppelstelle (141) austritt,
**dadurch gekennzeichnet, dass**
zumindest eine der Sekundär-LED-Lichtquellen (12a) den Lichtleiter (14) direkt durchleuchtet.

2. Fahrzeugscheinwerfer nach Anspruch 1, **dadurch gekennzeichnet, dass** der zumindest eine Lichtauskoppelbereich (141) in einem zentralen Bereich des Lichtleiters (14) angeordnet ist, wobei vorzugsweise der zumindest eine Lichtauskoppelbereich (141) entlang eines horizontalen Schnittes durch den Lichtleiter (14) in der Mitte des horizontalen Schnittes liegt.

3. Fahrzeugscheinwerfer nach Anspruch 1 oder 2, **dadurch gekennzeichnet, dass** die zumindest eine Lichteinkoppelstelle (140) des Lichtleiters (14) zum Einkoppeln von Licht der zumindest einen Sekundär-LED-Lichtquelle (12) in einem äußeren Bereich des Lichtleiters (14) angeordnet ist, wobei vorzugsweise die zumindest eine Sekundär-LED-Lichtquelle (12a), deren Licht direkt durch den Lichtleiter (14) durchtritt, zwischen der zumindest einen Lichteinkoppelstelle (140) und der zumindest einen Lichtauskoppelstelle (141) angeordnet ist.

4. Fahrzeugscheinwerfer nach einem der Ansprüche 1 bis 3, **dadurch gekennzeichnet, dass** pro Lichtmodul (10) genau zwei oder zumindest zwei Sekundär-LED-Lichtquellen (12a) vorgesehen sind, deren Licht direkt durch den Lichtleiter (14) durchtritt, und genau zwei oder zumindest zwei Sekundär-LED-Lichtquellen (12) vorgesehen sind, welche Licht über zumindest eine Lichteinkoppelstelle (140), vorzugsweise über genau zwei oder eine der Anzahl der Sekundär-LED-Lichtquellen (12) entsprechende Anzahl an Lichteinkoppelstellen (140) in den Lichtleiter (14) einkoppeln, wobei vorzugsweise die Sekundär-LED-Lichtquellen (12, 12a) entlang der Horizontalerstreckung des Lichtleiters (14) verteilt angeordnet und vorzugsweise symmetrisch in Bezug auf die zumindest eine Lichtauskoppelstelle (141) angeordnet sind.

5. Fahrzeugscheinwerfer nach einem der Ansprüche 1 bis 4, **dadurch gekennzeichnet, dass** der Lichtleiter (14) zumindest eine Öffnung oder Ausnehmung (145) zum Durchtritt von Licht aus der zumindest einen Primär-LED-Lichtquelle (11) aufweist, wobei vorzugsweise die zumindest eine Primär-LED-Lichtquelle (11) in der Öffnung bzw. Ausnehmung (145) angeordnet ist.

6. Fahrzeugscheinwerfer nach einem der Ansprüche 1 bis 5, **gekennzeichnet durch** genau eine Primär-LED-Lichtquelle (11) pro LED-Lichmodul (10).

7. Fahrzeugscheinwerfer nach einem der Ansprüche 1 bis 6, **dadurch gekennzeichnet, dass** der Lichtleiter (14) anschließend an eine Lichteinkoppelstelle (140) einen gekrümmten, z.B. parabolisch geformten Abschnitt (150) aufweist, welcher die eingekoppelten Lichtstrahlen der zumindest einen Sekundär-LED-Lichtquelle (12) im Wesentlichen parallel richtet, wobei vorzugsweise der Lichtleiter (14) im Bereich des gekrümmten Abschnittes (150) bereichsweise oder im gesamten gekrümmten Abschnitt (150) Licht reflektierend ausgebildet ist.

8. Fahrzeugscheinwerfer nach Anspruch 7, **dadurch gekennzeichnet, dass** anschließend an einen gekrümmten Abschnitt (150) des Lichtleiters (14) ein Lichtleiter-Verbindungsabschnitt (151) vorgesehen ist, welcher den gekrümmten Lichtleiterabschnitt (150) mit dem Lichtleiterauskoppelbereich (141) verbindet, wobei der Lichtleiter-Verbindungsabschnitt (151) eine von den Sekundär-LED-Lichtquellen (12a) abgewandte Begrenzungsfläche (152) aufweist, welche Begrenzungsfläche (152) eben ausgebildet ist oder gekrümmt, wobei vorzugsweise die Krümmung an die Bildfeldwölbung der Linse (13) angepasst ist.

9. Fahrzeugscheinwerfer nach Anspruch 8, **dadurch gekennzeichnet, dass** die den Sekundär-LED-Lichtquellen (12a) zugewandte Begrenzungsfläche (153) des Lichtleiters (14) eben oder gekrümmt ausgebildet ist, wobei vorzugsweise die den Sekundär-LED-Lichtquellen (12a) zugewandte Begrenzungsfläche (153) des Lichtleiters (14) und die von den Sekundär-LED-Lichtquellen (12a) abgewandte Begrenzungsfläche (152) parallel zueinander verlaufen.

10. Fahrzeugscheinwerfer nach einem der Ansprüche 1 bis 9, **dadurch gekennzeichnet, dass** die zumindest eine Lichtauskoppelstelle (141) derart ausgebildet ist, dass Licht aus dem Lichtleiter-Verbindungsabschnitt (151), vorzugsweise im Wesentlichen normal auf das Licht aus dem Lichtleiter-Verbindungsabschnitt (151), umgelenkt wird, wozu die zumindest eine Lichtauskoppelstelle (141) z.B. gestuft oder prismenförmig ausgebildet ist.

11. Fahrzeugscheinwerfer nach einem der Ansprüche 1 bis 10, **dadurch gekennzeichnet, dass** eine Lichtaustrittsfläche des Lichtleiters (14) hinsichtlich seiner vertikalen Erstreckung eine definierte Ausdehnung, vorzugsweise unterschiedliche definierte vertikale Ausdehnungen an unterschiedlichen horizontalen Punkten, aufweist.

12. Fahrzeugscheinwerfer nach einem der Ansprüche 1 bis 11, **dadurch gekennzeichnet, dass** die Linsen (13) der einzelnen Lichtmodule (10) derart ausgebildet sind, dass die überlagerten Lichtbilder der einzelnen Lichtmodule (10) die Hauptlichtfunktion und/oder die Zusatzlichtfunktion ergeben, wobei vorzugsweise die Linsen (13) Freiformlinsen sind, welche Freiformlinsen vorzugsweise das Lichtbild der einzelnen LED-Lichtquellen nach unten und in der Breite aufweiten.

13. Fahrzeugscheinwerfer nach einem der Ansprüche 1 bis 12, **dadurch gekennzeichnet, dass** jene Sekundär-LED-Lichtquellen (12a), deren Licht direkt durch den Lichtleiter (14) durchtritt, in einer gemeinsamen Horizontalebene liegen, und dass jene Sekundär-LED-Lichtquellen (12), welche Licht über zumindest eine Lichteinkoppelstelle (140) in den Lichtleiter (14) einkoppeln, ebenfalls in einer gemeinsamen Horizontalebene liegen, wobei vorzugsweise die Horizontalebene jener Sekundär-LED-Lichtquellen (12a), deren Licht direkt durch den Lichtleiter (14) durchtritt, oberhalb der Horizontalebene jener Sekundär-LED-Lichtquellen (12), welche Licht über zumindest eine Lichteinkoppelstelle (140) in den Lichtleiter (14) einkoppeln, liegt.

14. Fahrzeugscheinwerfer nach einem der Ansprüche 1 bis 13, **dadurch gekennzeichnet, dass** zumindest ein weiteres Lichtmodul (20) zur Erzeugung eines Asymmetrieanteils in der Hauptlichtverteilung vorgesehen ist, wobei vorzugsweise das zumindest eine weitere Lichtmodul (20) zumindest eine LED-Lichtquelle (22) und zumindest eine Linse (21) aufweist, welche Linse (21) bevorzugt eine Sammellinse ist.

15. Fahrzeugscheinwerfer nach einem der Ansprüche 1 bis 14, **dadurch gekennzeichnet, dass** bei aktivierter Zusatzlichtverteilung die Primär-LED-Lichtquellen (11) gedimmt oder abgeschaltet sind.

16. Fahrzeugscheinwerfer nach einem der Ansprüche 1 bis 15, **dadurch gekennzeichnet, dass** bei aktivierter Hauptlichtverteilung die Primär-LED-Lichtquelle ein- und die Sekundär-LED-Lichtquelle ausgeschaltet sind.

17. Fahrzeugscheinwerfer nach einem der Ansprüche 1 bis 16, **dadurch gekennzeichnet, dass** die Hauptlichtverteilung eine abgeblendete Lichtverteilung, z.B. eine Abblendlichtverteilung, Nebellicht oder Autobahnlicht ist, und/oder die Zusatzlichtverteilung eine Tagfahrlichtverteilung ist.

## Claims

1. A vehicle headlight (1) for creating a primary light distribution and an auxiliary light distribution, wherein the vehicle headlight (1) comprises two or more LED light modules (10), wherein each of the LED light modules (10)
*) comprises one or more primary LED light sources (11), wherein a primary LED light source (11) comprises at least one light-emitting diode (11');
*) comprises two or more secondary LED light sources (12, 12a), wherein a secondary LED light source (12, 12a) comprises at least one light-emitting diode (12'); and
*) comprises a lens (13);
wherein the light emitted by the at least one primary LED light source (11) is radiated directly onto the lens (13) and projected from there into the exterior space, wherein the light emitted by the primary LED light sources (11) of all LED modules (10) forms the primary light distribution;
and wherein the light emitted by the secondary LED light sources (12, 12a) of an LED module (10) is radiated onto the lens (13) of the LED module (10) by way of an optical waveguide (14), the lens (13) projecting the light into the exterior space, and wherein the light emitted by the secondary LED light sources (12, 12a) of all LED modules (10) forms the auxiliary light distribution;
wherein light is coupled by at least one of the secondary LED light sources (12) into the optical waveguide (14) via at least one light incoupling area (140) and
exits via at least one light outcoupling area (141), preferably substantially parallel, preferably so as to produce a maximum contribution to the auxiliary light distribution, **characterized in that** at least one of the secondary LED light sources (12a) shines directly through the optical waveguide (14).

2. The vehicle headlight according to claim 1, **characterized in that** the at least one light outcoupling region (141) is disposed in a central region of the optical waveguide (14), wherein preferably the at least one light outcoupling region (141) is located along a horizontal section through the optical waveguide (14) at the center of the horizontal section.

3. A vehicle headlight according to to claim 1 or 2, **characterized in that** the at least one light incoupling area (140) of the optical waveguide (14) for coupling in light of the at least one secondary LED light source (12) is disposed in an outer region of the optical waveguide (14), wherein preferably the at least one secondary LED light source (12a), the light of which passes directly through the optical waveguide (14), is disposed between the at least one light incoupling point (140) and the at least one light outcoupling area (141).

4. A vehicle headlight according to any one of claims 1 to 3, **characterized in that** exactly two, or at least two; secondary LED light sources (12a) are provided for each light module (10), the light of these LED light sources passing directly through the optical waveguide (14), and exactly two, or at least two, secondary LED light sources (12) are provided, which couple light into the optical waveguide (14) via at least one light incoupling point (140), preferably via exactly two light incoupling points (140), or via a number that corresponds to the number of secondary LED light sources (12), wherein preferably the secondary LED light sources (12, 12a) are distributed along the horizontal extension of the optical waveguide (14) and preferably disposed symmetrically relative to the at least one light outcoupling area (141).

5. A vehicle headlight according to any one of claims 1 to 4, **characterized in that** the optical waveguide (14) comprises at least one opening or cut-out (145) for light from the at least one primary LED light source (11) to pass through, wherein preferably the at least one primary LED light source (11) is disposed in the opening or cut-out (145).

6. A vehicle headlight according to any one of claims 1 to 5, **characterized by** exactly one primary LED light source (11) per LED light module (10).

7. A vehicle headlight according to any one of claims 1 to 6, **characterized in that** the optical waveguide (14) has a curved, for example parabolically shaped, section (150) adjacent to a light incoupling area (140), this section assuring the substantially parallel direction of the coupled-in beams of the at least one secondary LED light source (12), wherein preferably the optical waveguide (14) is designed to be reflective in the region of the curved section (150), either in some areas or in the entire curved section (150).

8. The vehicle headlight according to claim 7, **characterized in that** an optical waveguide connecting section (151) is provided adjacent to a curved section (150) of the optical waveguide (14), this connecting section connecting the curved optical waveguide section (150) to the optical waveguide outcoupling region (141), wherein the optical waveguide connecting section (151) comprises a delimiting surface (152) that faces away from the secondary LED light sources (12a), the delimiting surface (152) having a planar or curved shape, wherein the curvature is preferably adapted to the field of curvature of the lens (13).

9. The vehicle headlight according to claim 8, **characterized in that** the delimiting surface (153) of the optical waveguide (14) facing the secondary LED light sources (12a) is planar or curved, wherein preferably the delimiting surface (153) of the optical waveguide (14) facing the secondary LED light sources (12a) and the delimiting surface (152) facing away from the secondary LED light sources (12a) extend parallel to each other.

10. A vehicle headlight according to any one of claims 1 to 9, **characterized in that** the at least one light outcoupling area (141) is designed so that light from the optical waveguide connecting section (151) is refracted, preferably substantially normal relative to the light from the optical waveguide connecting section (151), for which purpose the at least one light outcoupling point (141) is designed in a stepped or prism shape, for example.

11. A vehicle headlight according to any one of claims 1 to 10, **characterized in that** a light exit area of the optical waveguide (14) has a defined extent in terms of the vertical extension thereof, preferably differing defined vertical extensions at differing horizontal points.

12. A vehicle headlight according to any one of claims 1 to 11, **characterized in that** the lenses (13) of the individual light modules (10) are designed so that the superposed light patterns of the individual light modules (10) result in the primary light function and/or the auxiliary light function, wherein preferably the lenses (13) are free-form lenses, these free-form lenses preferably expanding the light pattern of the individual LED light sources downward and in terms of width.

13. A vehicle headlight according to any one of claims 1 to 12, **characterized in that** those secondary LED light sources (12a), the light of which passes directly through the optical waveguide (14), are located in a common horizontal plane, and that those secondary LED light sources (12) that couple light into the optical waveguide (14) via at least one light incoupling area (140) are likewise located in a common horizontal plane, wherein preferably the horizontal plane of those secondary LED light sources (12a), the light of which passes directly through the optical waveguide (14), is located above the horizontal plane of those secondary LED light sources (12) that couple light into the optical waveguide (14) via at least one light incoupling point (140).

14. A vehicle headlight according to any one of claims 1 to 13, **characterized in that** at least one further light module (20) is provided so as to create an asymmetrical component in the primary light distribution, wherein preferably the at least one further light module (20) comprises at least one LED light source (22) and at least one lens (21), which lens (21) is preferably a converging lens.

15. A vehicle headlight according to any one of claims 1 to 14, **characterized in that** the primary LED light sources (11) are dimmed or switched off when the auxiliary light distribution is activated.

16. A vehicle headlight according to any one of claims 1 to 15, **characterized in that** the primary LED light source is switched on and the secondary LED light source is switched off when the primary light distribution is activated.

17. A vehicle headlight according to any one of claims 1 to 16, **characterized in that** the primary light distribution is a dimmed light distribution, for example a low-beam light distribution, fog light or highway light and/or the auxiliary light distribution is a daytime running light distribution.

## Revendications

1. Phare de véhicule (1) pour la production d'une distribution de lumière principale ainsi que d'une distribution de lumière additionnelle, le phare de véhicule (1) comportant au moins deux modules d'éclairage à LED (10), chacun des modules d'éclairage à LED (10)
*) comportant une ou plusieurs sources de lumière à LED primaires (11), une source de lumière à LED primaire (11) comportant au moins une diode électroluminescente (11') ;
*) comportant au moins deux sources de lumière à LED secondaires (12, 12a), une source de lumière à LED secondaire (12, 12a) comportant au moins une diode électroluminescente (12'), ainsi que
*) comportant une lentille (13),
dans lequel la lumière émise par la au moins une source de lumière à LED primaire (11) est irradiée directement sur la lentille (13) et est projetée par celle-ci dans l'espace extérieur, la lumière émise par les sources de lumière à LED primaires (11) de tous les modules à LED (10) formant la distribution de lumière principale,
et dans lequel la lumière émise par les sources de lumière à LED secondaires (12, 12a) d'un module à LED (10) est irradiée sur la lentille (13) du module à LED (10) par l'intermédiaire d'un guide de lumière (14), laquelle lentille (13) projette la lumière dans l'espace extérieur, et dans lequel la lumière émise par les sources de lumière à LED secondaires (12, 12a) de tous les modules à LED (10) forme la distribution de lumière additionnelle,
dans lequel la lumière est couplée par au moins l'une des sources de lumière à LED secondaires (12) dans le guide de lumière (14) par l'intermédiaire d'au moins un point de couplage de lumière (140), et
sort de préférence dirigée sensiblement parallèlement, de préférence pour la production d'une contribution maximale à la distribution de lumière additionelle, par l'intermédiaire d'au moins un point de découplage de lumière (141),
**caractérisé par le fait que**
au moins l'une des sources de lumière à DEL secondaires (12a) brille directement à travers le guide de lumière (14).

2. Phare de véhicule selon la revendication 1, **caractérisé par le fait que** la au moins une zone de découplage de lumière (141) est disposée dans une zone centrale du guide de lumière (14), où de préférence la au moins une zone de découplage de lumière (141) se situe le long d'une section horizontale à travers le guide de lumière (14) au centre de la section horizontale.

3. Phare de véhicule selon l'une des revendications 1 ou 2, **caractérisé par le fait que** le au moins un point de couplage de lumière (140) du guide de lumière (14) pour le couplage de lumière de la au moins une source de lumière à DEL secondaire (12) est disposé dans une zone externe du guide de lumière (14), où de préférence la au moins une source de lumière à LED secondaire (12a) dont la lumière traverse directement le guide de lumière (14), est disposée entre le au moins un point de couplage de lumière (140) et le au moins un point de découplage de lumière (141).

4. Phare de véhicule selon l'une des revendications 1 à 3, **caractérisé par le fait que** par module d'éclairage (10) exactement deux ou au moins deux sources de lumière à LED secondaires (12a) sont prévues, dont la lumière traverse directement le guide de lumière (14), et exactement deux ou au moins deux sources de lumière à LED secondaires (12) sont prévues, lesquelles couplent la lumière dans le guide de lumière (14) par l'intermédiaire d'au moins un point de couplage de lumière (140), de préférence par l'intermédiaire d'exactement deux ou d'un nombre de points de couplage de lumière (140) correspondant au nombre de sources de lumière à LED secondaires (12), où, de préférence, les sources de lumière à LED secondaires (12, 12a) sont disposées réparties le long de l'étendue horizontale du guide de lumière (14) et sont disposées de préférence symétriquement par rapport à l'au moins un point de découplage de lumière (141).

5. Phare de véhicule selon l'une des revendications 1 à 4, **caractérisé par le fait que** le guide de lumière (14) présente au moins une ouverture ou un évidement (145) pour le passage de lumière provenant de la au moins une source de lumière à LED primaire (11), où de préférence la au moins une source de lumière à LED primaire (11) est disposée dans l'ouverture ou l'évidement (145).

6. Phare de véhicule selon l'une des revendications 1 à 5, **caractérisé par** exactement une source de lumière à LED primaire (11) par module d'éclairage à LED (10).

7. Phare de véhicule selon l'une des revendications 1 à 6, **caractérisé par le fait que** le guide de lumière (14) présente après un point de couplage de lumière (140) une section (150) formée courbe, par exemple de façon parabolique, laquelle dirige de façon sensiblement parallèle les rayons lumineux couplés de la au moins une source de lumière à LED secondaire (12), où, de préférence, le guide de lumière (14) est réalisé réfléchissant la lumière dans la zone de la section courbe (150) par endroits ou dans toute la section courbe (150).

8. Phare de véhicule selon la revendication 7, **caractérisé par le fait qu'**après une section courbe (150) du guide de lumière (14) est prévue une section de liaison de guide de lumière (151), laquelle relie la section de guide de lumière courbe (150) avec la zone de découplage de guide de lumière (141), où la section de liaison de guide de lumière (151) présente une surface de délimitation qui est tournée à l'opposé des sources de lumière à LED secondaires (12a), laquelle surface de délimitation (152) est réalisée plane ou courbe, où, de préférence, la courbure est adaptée à la courbure du champ d'image de la lentille (13).

9. Phare de véhicule selon la revendication 8, **caractérisé par le fait que** la surface de délimitation (153) du guide de lumière (14) tournée vers les sources de lumière à LED secondaires (12a) est réalisée plane ou courbe, où, de préférence, la surface de délimitation (153) du guide de lumière (14) tournée vers les sources de lumière à LED secondaires (12a) et la surface de délimitation (152) tournée à l'opposé des sources de lumière à LED secondaires (12a) s'étendent parallèlement l'une à l'autre.

10. Phare de véhicule selon l'une des revendications 1 à 9, **caractérisé par le fait que** le au moins un point de découplage de lumière (141) est réalisé de telle sorte que la lumière provenant de la section de liaison de guide de lumière (151), est déviée de préférence sensiblement perpendiculairement à la lumière provenant de la section de liaison de guide de lumière (151), ce pourquoi le au moins un point de découplage de lumière (141) est réalisé par exemple étagé ou prismatique.

11. Phare de véhicule selon l'une des revendications 1 à 10, **caractérisé par le fait qu'**une surface de sortie de lumière du guide de lumière (14) présente en ce qui concerne son étendue verticale, une étendue définie, de préférence des étendues verticales définies différentes en des points horizontaux différents.

12. Phare de véhicule selon l'une des revendications 1 à 11, **caractérisé par le fait que** les lentilles (13) des modules d'éclairage individuels (10) sont réalisées de telle sorte que les images lumineuses superposées des modules d'éclairage individuels (10) donnent la fonction d'éclairage principale et/ou la fonction d'éclairage additionnelle, où, de préférence, les lentilles (13) sont des lentilles de forme libre, lesquelles lentilles de forme libre élargissent l'image lumineuse des sources de lumière à LED individuelles vers le bas et dans la largeur.

13. Phare de véhicule selon l'une des revendications 1 à 12, **caractérisé par le fait que** les sources de lumière à LED secondaires (12a), dont la lumière traverse directement le guide de lumière (14) se situent dans un plan horizontal commun, et **par le fait que** les sources de lumière à LED secondaires (12), lesquelles couplent la lumière dans le guide de lumière (14) par l'intermédiaire d'au moins un point de couplage de lumière (140), se situent également dans un plan horizontal commun, où, de préférence, le plan horizontal des sources de lumière à LED secondaires (12a), dont la lumière traverse directement le guide de lumière (14), se situe au-dessus du plan horizontal des sources de lumière à LED secondaires (12), qui couplent la lumière dans le guide de lumière (14) par l'intermédiaire d'au moins un point de couplage de lumière (140).

14. Phare de véhicule selon l'une des revendications 1 à 13, **caractérisé par le fait qu'**au moins un autre module d'éclairage (20) est prévu pour la production d'une partie asymétrique dans la distribution de lumière principale, où, de préférence, le au moins un autre module d'éclairage (20) présente au moins une source de lumière à LED (22) et au moins une lentille (21), laquelle lentille (21) est, de préférence, une lentille convergente.

15. Phare de véhicule selon l'une des revendications 1 à 14, **caractérisé par le fait que** les sources de lumière à LED primaires (11) sont atténuées ou éteintes lorsque la distribution de lumière additionnelle est activée.

16. Phare de véhicule selon l'une des revendications 1 à 15, **caractérisé par le fait que** la source de lumière à LED primaire est allumée et la source de lumière à LED secondaire est éteinte lorsque la distribution de lumière principale est activée.

17. Phare de véhicule selon l'une des revendications 1 à 16, **caractérisé par le fait que** la distribution de lumière principale est une distribution de lumière de feu de croisement, par exemple une distribution de lumière de feu de croisement, une lumière antibrouillard ou une lumière pour autoroute, et/ou la distribution de lumière additionnelle est une distribution de lumière de feu de circulation diurne.
